# EUROPEAN PATENT APPLICATION

(11) **EP 4 506 123 A1**
(43) Date of publication of application: **12.02.2025**
(21) Application number: 23190484.8
(22) Date of filing: 09.08.2023
(51) Int. Cl.: B26D 7/06, F16H 1/16, F16H 1/04

(54) **FOOD PRODUCT FEED APPARATUS WITH TRACTION ROLLER DRIVE**

(71) Applicant: Weber Food Technology GmbH, 35236 Breidenbach (DE)
(72) Inventor: BAUMEISTER, Christian, 57234 Wilnsdorf (DE); GARAEW, Sergej, 57080 Siegen (DE); GEIL, Thorben, 35713 Eschenburg (DE); KAHL, Philip, 35066 Frankenberg (DE)
(74) Representative: Grünecker Patent- und Rechtsanwälte PartG mbB

(57) **Abstract**

The present invention relates to a feed apparatus for feeding food products to a slicing station of a food slicing machine, comprising a drive (18) having a drive shaft (19) adapted to rotate about a drive shaft axis (300), a traction roller (17) arranged to rotate about a traction roller axis (210), wherein the traction roller (17) is configured to contact a food product, in particular an upper surface of said food product, and to support conveying said food product towards the slicing station, a transmission (20) configured to transmit a rotation of the drive shaft (19) to the traction roller (17), wherein the drive shaft axis (300) of the drive shaft (19) is non-parallel to the traction roller axis (210) of the traction roller (17).

## Description

The present invention relates to a feed apparatus for feeding food products to a slicing station of a food slicing machine. The invention further relates to a feed apparatus for feeding a food product along a feed direction to a slicing station of a food slicing machine and a method for conveying a food product along a feed direction to a slicing station of a food slicing machine.

Food products, for example meat, cheese or bread, are often in the form of elongated food bars and are fed in a food slicing machine of a food processing line to a slicing station with a cutting blade, for example with a rotating sickle or circular blade. The food slicing machine may be a high-performance slicer. For this purpose, one or more feed apparatuses may be provided in a feed area, which come into contact with the food product in order to move it to a cutting plane of the slicing station. The feed apparatus may comprise an upper product conveyor belt which may be adapted to apply a pressure onto the food product from above. However, conveyor belts have to be removed frequently from the feed apparatus for cleaning to meet hygiene requirements. Removing the conveyor belts usually requires to remove the entire upper feed apparatus. Furthermore, depending on the food product to be processed, food product debris may accumulate in between the conveyor belt and its drive roller and other rollers.

Feed apparatuses may have components such as drive rollers, which are driven via a drive belt. Such drive belts may also increase the cleaning requirements.

Feed apparatuses may have a traction roller to support and convey the food product. Between the traction roller and the slicing station, a contact roller may be arranged. The contact roller may have a smaller diameter, such that its rotation axis can be arranged closer to the slicing station. The contact roller may be mounted on a mounting structure, wherein the mounting structure is rotatable around the axis of the traction roller. The mounting structure may be biased in the direction of the food product, in particular elastically biased, for example by means of a spring. The position of the contact roller may therefore depend on the pretensioning of the spring as well as the elasticity of the food product, but cannot be adjusted during production.

A food product may initially be provided in the food slicing machine on an infeed conveyor, in particular a conveyor belt, or be placed or conveyed onto it. A track guide with separating means, in particular metal sheets, may be arranged to maintain a separation of the food products on the infeed conveyor. The separating means may be fitted above the infeed conveyor. The separating means may extend from above to just above the conveyor surface of the infeed belt. The lateral position of these separating means may be adjusted to the width of the food product to be sliced. From the infeed conveyor, the food product may be conveyed onto a product conveyor belt.

The product conveyor belt following the infeed belt in the conveying direction may be part of a loading rocker and may be pivoted upward about an axis located on its downstream side. In this way, the food product may be conveyed horizontally from the infeed belt onto the product conveyor belt. Then, the product conveyor belt may be pivoted upward to feed the food product to the knife blade in a support plane that is inclined relative to a horizontal plane. A fixed lateral stop may be provided, the transverse position and longitudinal orientation of which are aligned with a cutting edge that interacts with the knife blade when the slices are separated from the product. A parallel side stop may be arranged on the side opposite the fixed side stop. This may provide longitudinal guidance for the food product. The adjustable side stop may be adjustable in the transverse direction, thus aligning a product in the transverse direction. In the case of a multi-track food slicing machine, which may be adapted to simultaneously slice several products lying parallel next to each other, the product feed may have multiple tracks. Accordingly, several side stops may be provided in the area of the product conveyor belt, which can be adjusted laterally to the conveying direction. The side stops may be adjustable together.

A product conveying device in the form of a lower product support may be arranged between the product conveyor belt and the knife blade. The lower product support may support a lower surface of the food product. The lower product support may feed the food product to the knife blade. The lower product support may be relatively short compared to the product conveyor belt. The lower product support may extend to just in front of the knife blade, thus may support the food product up to the cutting edge. The lower product support may support accurate product advancement towards the cutting plane.

A gripper may be provided which engages with a rear end, in particular an upstream end, of the food product. The gripper may act as a product holder during the feed of the food product towards the cutting plane. By means of the guidance by the gripper, differences in the weight or cross-section of the products may be compensated and the thickness of the separated product slices for the fed products may be changed independently of each other during slicing, so that a predetermined weight of individual product slices or the weight of portions of several slices may be achieved individually. By retracting the food product by means of the gripper, a distance to the knife blade may be established for idle cuts. In multi-track food slicers, one gripper may be provided per conveyor track. The grippers may be attached to a common feed unit and may be extended relative to the feed unit in the conveying direction and retracted against the conveying direction independently of each other.

According to a first aspect of the invention, there is provided a feed apparatus for feeding food products to a slicing station of a food slicing machine, in particular as specified above. The feed apparatus comprises a drive having a drive shaft adapted to rotate about a drive shaft axis and a traction roller arranged to rotate about a traction roller axis. The traction roller is configured to contact a food product, in particular an upper surface of said food product. The traction roller may be configured to support conveying said food product towards the slicing station. The feed apparatus further comprises a transmission. The transmission may be configured to transmit a rotation of the drive shaft to the traction roller. The transmission may be configured to transmit a torque or torsional moment of the drive shaft to the traction roller. The drive shaft axis of the drive shaft may be non-parallel to the traction roller axis of the traction roller.

The feed apparatus may provide a good transmission between the drive and the traction roller. The feed apparatus may be simple to clean.

The slicing machine and the feed apparatus may be part of a food processing line. The feed apparatus may feed the food products in a feeding direction. The food processing line may comprise multiple processing stations subsequently arranged in the feed direction. The slicing machine may comprise the feed apparatus. The food processing line may comprise a packaging unit arranged downstream of the slicing machine. In particular, downstream means after the food slicing machine with respect to the feed direction.

The slicing station may comprise a knife blade, in particular a knife blade as described above.

The traction roller may be adapted to convey the food product towards the slicing station. The traction roller may be adapted to contribute to conveying said food product towards the slicing station.

The traction roller may comprise a rotation shaft. The rotation shaft may be adapted to rotate about the drive shaft axis of the traction roller.

The traction roller may comprise a circumferential traction surface. The traction roller may comprise a side surface. The circumferential traction surface may be adapted to get into contact with the food product, in particular an upper surface of the food product. The side surface may be connected to the rotation shaft. The rotation shaft may extend, in particular protrude, from the side surface.

The traction roller may comprise at least two discrete circumferential traction surfaces. The traction roller may comprise at least two discrete side surfaces. The rotation shaft may extend from a first side surface to a second side surface of the traction roller. The traction roller may have two inner side surfaces and two outer side surfaces. The rotation shaft may extend between the two inner surfaces.

The traction roller may comprise a first roller and a second roller. The first roller may be driven by the drive shaft, in particular through the transmission. The second roller may be rotatable coupled to the first roller, in particular such that the second roller rotates together with the first roller. The second roller may be rotatable de-coupled to the first roller, in particular such that the second roller does not rotate together with the first roller.

The circumferential traction surface may be inclined inwards, in particular around the feed direction or drive shaft axis. The circumferential traction surfaces may be inclined inwards, in particular around the feed direction or drive shaft axis. The circumferential traction surfaces of the first and second roller may partially face each other, in particular on the side that is facing the food product. The circumferential traction surfaces may be inclined, in particular arranged at an angle rotated around the feed direction or drive shaft axis, such that a food product with a circular cross section may be adequately supported and conveyed by the traction roller.

The feed apparatus may be free of conveyor belts. In particular, the transmission between the drive and the traction roller may be free of conveyor belts. The feed apparatus may be free of drive belts. In particular, the transmission between the drive and the traction roller may be free of drive belts. In particular, the transmission between the drive shaft and the traction roller may be free of drive belts. The transmission between a power source or a motor in the drive and the traction roller may be free of drive belts.

The transmission may directly transmit a rotation and/or torque of the drive shaft to the traction roller. The transmission may indirectly transmit a rotation and/or torque of the drive shaft to the traction roller, in particular via a transmission element.

The traction roller, the drive and the drive shaft may be mounted on a base member. The traction roller, the drive, the drive shaft and the transmission may be directly or indirectly mounted on a base member. The transmission, in particular a first part of the transmission, may be mounted on the drive shaft, wherein the drive shaft is mounted on the base member. The transmission, in particular a second part of the transmission, may be mounted on the traction roller, wherein the traction roller is mounted on the base member.

A projection of the traction roller axis onto a horizontal plane may be orthogonal to a projection of the drive shaft axis onto said horizontal plane. Wherein the angle between the projection of the traction roller axis and the projection of the drive shaft axis is between 70 degrees and 110 degrees, in particular between 80 degrees and 100 degrees, in particular between 85 degrees and 95 degrees. The projection direction may be orthogonal to the horizontal plane. A projection of the traction roller axis onto a horizontal plane may be non-parallel to a projection of the drive shaft axis onto said horizontal plane.

The drive shaft axis may be parallel to the feed direction. The project of the drive shaft axis onto a horizontal plane may be arranged at an angle to the projection of the feed direction into the horizontal plane. In particular, the angle may be between -30 degrees and 30 degrees, in particular between -20 degrees and 20 degrees, in particular between -10 degrees and 10 degrees.

The drive shaft axis of the drive shaft and the traction roller axis of the traction roller intersect with each other. The drive shaft axis of the drive shaft and the traction roller axis of the traction roller cross adjacent to other within a range of 50 millimeters, in particular 20 millimeters, in particular 10 millimeters, in particular 5 millimeters. The shortest distance from the drive shaft axis to the traction roller axis may be less than 50 millimeters, in particular less than 20 millimeters, in particular less than 10 millimeters, in particular less than 5 millimeters.

The traction roller axis may be orthogonal to the drive shaft axis. Wherein the angle between the traction roller axis and the drive shaft axis is between 70 degrees and 110 degrees, in particular between 80 degrees and 100 degrees, in particular between 85 degrees and 95 degrees.

The drive shaft axis may be arranged in the center of the feed apparatus. The feed apparatus may define a feed lane. The drive shaft axis may be arranged in the center of the feed lane.

The transmission may comprise or may consist of a gear transmission, in particular a gear or a worm drive. The transmission may comprise or may consist of a contact gear or a contactless gear. The transmission may comprise or may consist of a contactless bevel gear. The transmission may comprise or may consist of a compact gear.

The transmission may comprise or consist of a first transmission element and a second transmission element.

The first transmission element may be directly or indirectly connected to the drive shaft or may be integrally formed in the drive shaft. In particular, the first transmission element is arranged at an end of the drive shaft that is adjacent to the traction roller. The first transmission element may integrally rotate with the drive shaft. The first transmission element may be fixed to the drive shaft.

The transmission may be arranged directly in between the drive shaft and the traction roller. The transmission may be arranged indirectly in between the drive shaft and the traction roller. In particular, additional elements may be arranged between the transmission and the drive shaft and/or the transmission and the traction roller. The first transmission element and the second transmission element may be arranged directly or indirectly in between the drive shaft and the traction roller.

The second transmission element may be directly or indirectly connected to the traction roller or may be integrally formed in the traction roller. The second transmission element may be arranged on the rotation shaft of the traction roller. The second transmission element may be arranged on the side surface, in particular the inner side surface, of the traction roller.

The first transmission element may transmit a rotation and/or torque, in particular the rotation and/or torque of the drive shaft, to the second transmission element via friction. The first transmission element may transmit a rotation and/or torque, in particular the rotation and/or torque of the drive shaft, to the second transmission element via a form-fitting engagement. In particular, teeth formed on the first transmission element may engage with teeth formed on the second transmission element.

The first transmission element may comprise the first transmission surface. The second transmission element may comprise the second transmission surface. The first transmission surface may be configured to mate with the second transmission surface, such that the rotation of the drive shaft may be transmitted through the traction roller.

The first transmission surface may comprise teeth. The teeth of the first transmission surface may be configured to mate with teeth of the second transmission surface.

The rotation of the drive shaft may be transmitted to the traction roller via friction between the first transmission surface and the second transmission surface. The rotation of the drive shaft may be transmitted to the traction roller via a form-fitting engagement of the first transmission surface and the second transmission surface.

The first transmission element may be a bevel wheel arranged at the drive shaft. The second transmission element may be a bevel wheel or a bevel ring arranged at the traction roller. The bevel wheel or bevel ring may be attached to the rotation shaft or a side surface, in particular an inner side surface, of the traction roller.

The first transmission element may be a worm arranged at the drive shaft. The second transmission element may be a worm gear arranged at the traction roller, in particular at the rotation shaft of the traction roller. In particular, the worm may be a worm screw and the worm gear may be a worm wheel.

The first transmission element may be a worm wheel arranged at the drive shaft. The second transmission element may be a worm or worm screw arranged at the traction roller, in particular at the rotation shaft of the traction roller.

This circumferential traction surface of the traction roller may be corrugated, rippled or may comprise teeth. The second transmission surface may form part of bevel wheel, a bevel ring or worm wheel. The worm wheel may comprise worm teeth. The worm teeth may be formed directly onto the rotation shaft. The teeth of the first transmission surface may be arranged at an angle with respect to the traction roller axis. The teeth may have a curved shape, in particular helical shape.

The traction roller may comprise a first roller and the second roller. The first roller and the second roller may be connected to the rotation shaft. The first bola may be connected to a first end of the rotation shaft. The second roller may be connected to a second end of the rotation shaft. The rotation shaft may extend along the traction roller axis. That rotation shaft may extend between the first roller and the second roller.

The first roller may have a first circumferential traction surface. The second roller may have a second circumferential traction surface. The first roller may have a first inner side surface. The second roller may have a second inner side surface. The second transmission element may be arranged at the first inner side surface or the second inner side surface.

The fist roller and the second roller may be rotated simultaneously. The fist roller and the second roller may be driven by the rotation of the drive shaft. Alternatively, the first roller or the second roller may be rotationally de-couple from the other roller, in particular the rotation shaft. The first roller or the second roller may be an idle roller. The first roller or the second roller may the driven by the drive shaft, whereas the other roller may be rotated by the movement of the food product.

The drive shaft may primarily extend in a first plane. The first plane may be a vertical plane. The first plane may be orthogonal to the traction roller axis. The drive may primarily extend in the first plane. The traction roller axis may be arranged at an angle to the first plane, in particular an angle between 20 degrees and 160 degrees, in particular between 50 degrees and 130 degrees, in particular between 70 degrees and 110 degrees, in particular between 80 degrees and 100 degrees.

The drive may comprise a motor, in particular an electromotor, in particular a servomotor. The drive may consist of a motor, in particular an electromotor, in particular a servomotor.

The traction roller may convey a food product along a feed direction. The drive shaft may primarily extend in a plane defined by the feed direction and a direction orthogonal to the feed direction. The directional for Bruno to defeat direction may be the vertical direction. The drive shaft may primarily extend in a plane defined by the feed direction and the vertical direction. The feed direction may be parallel to the first plane. A projection of feed direction onto a horizontal plane may be parallel to a projection of the drive and/or the drive shaft onto the horizontal plane.

The feed apparatus may further comprise a frame. The traction roller, the drive shaft and the drive may be arranged on the frame. The frame may be pivotally arranged about a feed apparatus pivot axis. The feed apparatus pivot axis may be in distance to the traction roller axis. The feed apparatus pivot axis may be orthogonal to the feed direction. The drive shaft may be arranged between the traction roller and the feed apparatus pivot axis. The feed apparatus pivot axis s may be orthogonal to the first plane.

The drive may be mounted on the frame. The drive may be mounted between two plates of the frame. The two plates may extend parallel to each other. The two plates may extend vertically.

In use, the traction roller may be arranged vertically above the food product. The traction roller may apply a vertical force onto the food product, in particular the upper surface of the food product. The vertical force may be applied through pivoting motion, in particular of the frame and/or the traction roller, around the feed apparatus pivot axis.

The feed apparatus may comprise an upper actuator. The upper actuator may be configured to pivot the frame around the feed apparatus pivot axis. The upper actuator may be configured to pivot the traction roller around the feed apparatus pivot axis. The upper actuator may comprise a cylinder. The upper actuator may be pneumatic or hydraulic cylinder. The upper actuator may be electrically driven.

The feed apparatus may comprise a cover element. The cover element may extend partially around the traction roller axis, in particular at a radial distance to the traction roller axis. The radial distance may smaller than the radius of the traction roller. The radial distance may be between 99 percent and 50 percent, in particular 90 percent and 60 percent, in particular 80 percent and 70 percent, of the radius of the traction roller.

The cover element may be arc-shaped. The cover element may be adapted to protect the transmission, in particular the first transmission element and/or the second transmission element, from dust, contaminations and/or dirt.

The cover element may be a metal sheet or a plastic sheet. The cover element may be mounted on a cover element mounting structure that is connected to the frame. In particular, the cover element mounting structure may be connected to the traction roller. The cover element mounting structure may be de-coupled from the rotation of the traction roller. The cover element mounting structure may be arranged around the rotation shaft of the traction roller. The cover element mounting structure may extend around the rotation shaft of the traction roller. The cover element mounting structure may be arranged round the drive shaft. The cover element mounting structure may extend round the drive shaft. The cover element may be detachable from the cover element mounting structure. The cover element may be connected to the cover element mounting structure via a fastening means, in particular a screw or multiple screws.

The cover element may extend circumferentially around the traction roller axis, in particular spanning an angle of at least 90 degrees, in particular at least 120 degrees, in particular at least 180 degrees. The cover element may extend between the first roller and the second roller. The cover element may extend between an inner side surface of the first roller and inner side surface of the second roller. The cover element may be arranged at least partially below. The rotation shaft of the traction roller. The cover element may be arranged at least partially below the traction roller axis.

The outer diameter of the cover element may be smaller than the outer diameter of the traction roller. Cover element may adapted to not get into contact with the food product. The radial distance from an outer surface of the cover element to the traction roller axis may be small than the radial distance of the circumferential traction surface to the traction roller axis.

The cover element may extend up to the transmission, in particular up to the second transmission element.

The feed apparatus may comprise a coupling interface. The coupling interface may be arranged in or adjacent to the drive shaft. The coupling interface may be arranged in or adjacent to the transmission. The coupling interface may be arranged between the drive shaft and the first transmission element. The coupling interface may be arranged between the first transmission element and the second transmission element. The coupling interface may be arranged between the second transmission element and the traction roller.

The coupling interface may consists of a first coupling interface and a second coupling interface. The feed apparatus may comprise a first coupling interface. The first coupling interface may be arranged in or adjacent to the drive shaft or the transmission.

The first coupling interface may be arranged in the drive shaft, between the drive shaft and the transmission, in particular the first transmission element or the second transmission element, or between the first transmission element and the second transmission element. The feed apparatus may comprise a second coupling interface. The second coupling interface may be arranged in the cover element mounting structure or between the frame and the cover element mounting structure.

The first and/or second coupling interface may allow that an assembly of the feed apparatus may be detachable from the rest of the feed apparatus. An assembly of the feed apparatus may be detachably arranged, in particular through the first and/or second coupling interface, on the feed apparatus. The assembly may comprise the traction roller. The assembly may comprise the traction roller and the transmission, in particular the second transmission element and/or the first transmission element. The assembly may comprise a part of the drive shaft, in particular the part that is adjacent to the traction roller. The assembly may comprise the cover element and/or part of the cover element mounting structure.

The feed apparatus may comprise an electrical connector. The electrical connector may be connected to a cable extending from the drive. The coupling interface may be arranged between the traction roller and the electrical connector. The coupling interface may be arranged between the knife blade and the electrical connector. The slicing machine may comprise a plug or socket, the plug or socket may be configured to mate with the electrical connector, in particular when the electrical connector is detached from the cable of the drive. The feed apparatus may comprise a blind socket. The blind socket may be configured to mate with the electrical connector, in particular when the electrical connector is detached from the cable of the drive. The drive may be detachable from the frame. The drive may be mounted on a support structure of the slicing machine, in particular when the drive is detached from the frame.

The feed apparatus may be part of a food slicing machine for slicing food products. The food slicing machine may further comprise a slicing station. The slicing station may comprise a knife blade. The feed apparatus may be configured to convey the food products towards the knife blade.

The traction roller may be adjacent to the knife blade. The traction roller may be in the vicinity of the knife blade. The distance between the knife blade and the traction roller axis may be less than 20 centimeters, in particular less than 15 centimeters, in particular less than 10 centimeters, in particular less than 5 centimeters.

The feed apparatus or the frame of the feed apparatus may be arranged pivotably around the feed apparatus pivot axis. The traction roller may be between the feed apparatus pivot axis and the knife blade.

An upper actuator, in particular the upper actuator described above, may be arranged above the feed apparatus or the frame of the feed apparatus. The upper actuator may be configured to pivot the feed apparatus or the frame around the feed apparatus pivot axis. The upper actuator may be arranged between the feed apparatus pivot axis and the traction roller. A first end of the upper actuator may be connected to the frame at a connection point. The connection point may be arranged horizontally between the traction roller and the feed apparatus pivot axis. A second end of the upper actuator may be connected to the different part of the slicing machine, in particular a part of the slicing machine that is arranged above the frame.

The feed apparatus may be an upper feed apparatus. The food slicing machine may further comprise a lower feed apparatus and/or a rear feed apparatus. The lower feed apparatus may comprise a lower feed conveyor belt. The lower feed apparatus may comprise a lower feed traction roller assembly. The lower feed traction roller assembly may be adapted to convey the food product towards the knife plate. The lower feed traction roller assembly may be adapted to get into contact with the lower surface of the food product. The lower feed traction roller assembly may comprise multiple traction rollers, in particular two traction rollers, in particular three traction roller, in particular for traction rollers, in particular five traction roller, in particular six or more traction rollers.

The traction roller may be arranged adjacent to the knife blade. The traction roller may be arranged between the knife blade and the drive shaft.

The food slicing machine may comprise multiple upper feed apparatuses, in particular according to the first aspect of the invention. The food slicing machine may further comprise at least one lower feed apparatus. The upper feed apparatuses may be arranged vertically above the at least one lower feed apparatus.

The food slicing machine may comprise multiple lower feed apparatuses. Each upper feed apparatus may be arranged vertically above a corresponding lower feed apparatus. The number of upper feed apparatuses may be equal to the number of lower feed apparatuses. The number of upper feed apparatuses may be twice the number of lower feed apparatuses.

The upper feed apparatuses may be driven independently of each other. The lower feed apparatuses may be driven independently of each other.

The food slicing machine may comprise multiple feed lanes. Each feed lane may be configured to convey a food product towards the knife blade. Each feed lane may have one lower feed apparatus allocated to it. Each feed lane may have one upper feed apparatus allocated to it. Each feed lane may have one traction roller allocated to it. Each feed lane may have two upper feed apparatuses, in particular two tractions rollers, allocated to it. The drive shaft axis of the allocated feed apparatus may be in the center of the feed lane.

According to a second aspect of the invention, there is provided a feed apparatus for feeding a food product along a feed direction to a slicing station of a food slicing machine, in particular as specified above. The feed apparatus comprises a mounting structure that is pivotable around a mounting pivot axis. The feed apparatus further comprises a distal contact roller mounted on the mounting structure and arranged to rotate about a distal contact roller axis. The distal contact roller axis is in a distance to the mounting pivot axis. The feed apparatus comprises an actuator configured to adjust the pivotability of the mounting structure around the mounting pivot axis.

With the feed apparatus according to the second aspect of the invention, it may be possible to adjust the position of the contact roller during use of the slicing machine.

The slicing machine and the feed apparatus may be part of a food processing line. The feed apparatus may feed the food products in a feeding direction. The food processing line may comprise multiple processing stations subsequently arranged in the feed direction. The slicing machine may comprise the feed apparatus. The food processing line may comprise a packaging unit arranged downstream of the slicing machine.

The actuator may be configured to restrict or provide a resistance against the pivoting movement of the mounting structure in at least a first pivoting direction. The first pivoting direction may be a direction where a part of the mounting structure that is vertically above the mounting pivot axis rotates away from the slicing station.

The actuator may be configured to adjust the resistance against the pivoting movement of the mounting structure in a first pivoting direction. The actuator may be configured to adjust the resistance against the pivoting movement of the mounting structure and a second pivoting direction. The actuator may be configured to adjust a position, wherein the pivoting movement of the mounting structure in the first pivoting direction is restricted. In particular, the mounting structure may freely rotate up to said position, but may not be able to move beyond said position in the first pivoting direction.

The distal contact roller is arranged downstream of the mounting pivot axis with respect to the feed direction. In particular the product first passes the mounting pivot axis and then the distal contact roller. The distal contact roller may be arranged between the mounting pivot axis and the slicing station.

The actuator may comprise a cylinder, in particular a pneumatic or hydraulic cylinder. The actuator may be arranged upstream of the mounting pivot axis. The mounting pivot axis may be arranged between the actuator and the distal contact roller.

The cylinder may be configured to prevent the movement of the mounting structure in the first pivoting direction. The cylinder may be configured to provide a resistance against the movement of the mounting structure in the first pivoting direction.

The feed apparatus may comprise a link element connected to the mounting structure. The link element may be connected at a radial distance with respect to the mounting pivot axis. The actuator may be configured to restrict or provide a resistance against the movement of the link element in a first link element direction. The first link element direction may be a direction against the feed direction. The first link element direction may a direction from the slicing station to the mounting pivot axis.

The link element may be connected to the mounting structure at a connection point. The connection point may be arranged above the mounting pivot axis, in particular with respect to a direction orthogonal to the feed direction or vertical direction. The food product and the connection point may be on opposite sides, in particular with respect to a direction orthogonal to the feed direction or vertical direction, of the mounting pivot axis.

The connection point may be arranged below the mounting pivot axis, in particular with respect to a direction orthogonal to the feed direction or vertical direction. The food product and the connection point may be on the same side, in particular with respect to a direction orthogonal to the feed direction or vertical direction, of the mounting pivot axis.

The actuator may be configured to limit the movement of the link element. The actuator may be configured the movement of the link element in the first link element direction. The actuator may be configured to allow movement of the link element up to an adjustable position and prevent further movement of the link element, in particular in the first link element direction, upon reaching said adjustable position. The actuator may be configured to adjust the adjustable position, in particular move the adjustable position close or further away from the mounting pivot axis.

The actuator may be configured to provide a stop for the link element. The actuator may be configured to provide a stop for the link element in the first link element direction and in particular allow movement of the link element in a direction opposite to the first link element direction. The actuator may be connected to the link element.

The link element may be arranged between the actuator and the mounting structure. The link element may be arranged between the mounting pivot axis and the actuator.

The feed apparatus may comprise a traction roller arranged to rotate about a traction roller axis. The traction roller may be configured to get into contact with the food product, in particular an upper surface of the food product, and to convey said food product towards the slicing station, in particular in the feed direction.

The traction roller may be a traction roller as described in the first aspect of the invention above. The traction roller axis may coincide with the mounting pivot axis.

A radius of the traction roller, in particular the radial distance of an outer circumferential surface of the traction roller to the traction roller axis, may be greater than a radius of the distal contact roller, in particular the radial distance of an outer surface of the distal contact roller to the distal contact roller axis.

The actuator may be configured to adjust a penetration depth of the traction roller into the food product. The penetration depth of the traction roller may be the distance corrugations or teeth formed on the outer circumferential surface of the traction roller extend into the food product. In particular, the actuator rotates the distal contact roller about the mounting pivot axis and thereby adjusts the distance of the distal contact roller to the food product, which influences the penetration depth of the contact roller. In particular, the actuator prevents the rotation of the distal contact roller about the mounting pivot axis and thereby defines the distance of the distal contact roller to the food product, which defines the penetration depth of the contact roller.

The actuator may be configured to control, in particular using feedback control, the penetration depth of the traction roller into the food product. The slicing machine may comprise a control unit. The control unit may be configured to control and adjust the actuator.

The traction roller may be driven by a drive, in particular an electro motor. The traction roller may be driven by a servomotor.

The distal contact roller may be arranged lower than the mounting pivot axis or the traction roller axis, in particular with respect to the vertical direction or a direction orthogonal to the feed direction. A lower circumferential surface of the distal contact roller may be arranged lower than a lower circumferential surface of the traction roller, in particular with respect to the vertical direction or a direction orthogonal to the feed direction.

The mounting structure may be limited in its movement between a minimum position and a maximum position. The mounting structure may be arranged to be moveable between a minimum position and a maximum position. The minimum position may refer to a first rotation angle about the mounting pivot axis. The maximum position may refer to a second rotation angle about the mounting pivot axis.

The actuator may be configured to adjust the minimum position and/or the maximum position. The actuator may be configured to restrict movement of the mounting structure towards the maximum position. In particular, the actuator can be actuated towards a certain position. In use, when the mounting structure reaches said position, the actuator prevents movement of the mounting structure towards the maximum position. The position, in which the movement of the mounting structure towards the maximum position is restricted may be adjustable by the actuator.

The actuator may be configured to provide a resistance against movement of the mounting structure towards the maximum position. The actuator may be configured to adjust the resistance against movement of the mounting structure towards the maximum position.

The actuator may be configured to restrict movement of the mounting structure towards the maximum position. In particular, the actuator can be actuated towards a certain position. In use, when the mounting structure reaches said position, the actuator prevents movement of the mounting structure towards the maximum position. The position, in which the movement of the mounting structure towards the maximum position is restricted may be adjustable by the actuator.

The actuator may be configured to provide a resistance against movement of the mounting structure towards the maximum position. The actuator may be configured to adjust the resistance against movement of the mounting structure towards the maximum position.

The actuator may provide a first resistance against the movement of the mounting structure towards the maximum position. The actuator may provide a second resistance against the movement of the mounting structure towards the minimum position. The first resistance may be greater than the second resistance. The first resistance may be lower than the second resistance. The first resistance may be equal to the second resistance. The actuator may be configured to adjust the first resistance. The actuator may be configured to adjust the second resistance.

When the mounting structure is in the minimum position, the distal contact roller may be configured to get into contact with the food product. When the mounting structure is in the maximum position, the distal contact roller may be configured to get into contact with the food product. When the mounting structure is in the maximum position, the distal contact roller may be arranged above the food product.

The feed apparatus may comprise a frame. The frame or the link element may comprise a slot hole and the other one of the link element and the frame may comprise a protrusion. The protrusion may extend into the slot hole. The interaction between the slow tone and the protrusion may limit movement of the mounting structure between the minimum position and the maximum position.

The slot hole may be engraved into the frame or the link element. The slot hole may extend over the entire thickness of the frame or the link element. The slot hole may extend only partially over the thickness of the frame or the link element.

The link element may comprise the protrusion. The protrusion may extend from the link element. The frame may comprise the slot hole. The slot hole may be formed in the frame. The frame may comprise the protrusion. The protrusion may extend from the frame. The link element may comprise the slot hole. The slot hole may be formed in the link element.

The slot hole may comprise a distal end and a proximal end. The proximal end may be closer to the mounting structure than the distal end. The proximal end may be closer to the mounting pivot axis than the distal end. The proximal end may be closer to the traction roller than the distal end.

When the mounting structure is in the maximum position, the protrusion may be arranged at the distal end of the slot hole. The distal end of the slot hole may be further away from the mounting structure than the proximal end. When the mounting structure is in the minimum position, the protrusion may be arranged at the proximal end of the slot hole. The proximal end of the slot hole may be closer to the mounting structure than the distal end.

The actuator may be configured to prevent movement of the protrusion towards the distal end of the slot hole. The actuator may be configured to adjust a position, where movement of the protrusion towards the distal end of the slot hole is prevented. When the protrusion is between the proximal end and said position, the protrusion may be moveable towards the distal end and the proximal end. When the protrusion is between the proximal end and said position, the mounting structure may be moveable towards the minimum position and the maximum position.

The actuator may be configured to adjust a resistance against movement of the protrusion towards the distal end of the slot hole. The actuator may be configured to adjust a resistance against movement of the protrusion towards the proximal end of the slot hole.

The feed apparatus may comprise a proximal contact roller. The proximal contact roller may be mounted on the mounting structure and arranged to rotate about a proximal contact roller axis. The proximal contact roller axis may be in stance to the mounting pivot axis.

The proximal contact roller may be arranged in front, in particular upstream, of the mounting pivot axis with respect to the feed direction. The mounting pivot axis may be arranged between the distal contact roller and the proximal contact roller. The proximal contact roller may be arranged between the actuator and the traction roller, in particular the traction roller axis. The proximal contact roller may be arranged between the slot hole and the traction roller, in particular the traction roller axis.

The mounting pivot axis and the distal contact roller axis may extend parallel to each other. The mounting pivot axis, the distal contact roller axis and the proximal contact roller axis may extend parallel to each other. The mounting pivot axis, the traction roller axis and the proximal contact roller axis may extend parallel to each other. The mounting pivot axis, the distal contact roller axis, the proximal contact roller axis and the traction roller axis may extend parallel to each other.

The distal contact roller and the proximal contact roller may be identical. The distal contact roller and the proximal contact roller may have an identical shape. The distal contact roller and the proximal contact roller may have the same radius. The distal contact roller and the proximal contact roller may be formed from the same material. The distal contact roller and the proximal contact roller may have the same elasticity. The circumferential surfaces of the distal contact roller and the proximal contact roller may be identical, in particular with respect to surface roughness and/or material. The widths of the distal contact roller and the proximal contact roller, measured in the direction of the mounting pivot axis, may be identical.

The distal contact roller and the proximal contact roller may have different shapes. The distal contact roller and the proximal contact roller may have different radii. The distal contact roller may have a larger radius than the proximal contact roller. The proximal contact roller may have a larger radius than the distal contact roller. The distal contact roller and the proximal contact roller may be formed from different materials. The distal contact roller and the proximal contact roller may have different elasticities. The proximal contact roller may be stiffer than the distal contact roller. The distal contact roller may be stiffer than the proximal contact roller. The circumferential surfaces of the distal contact roller and the proximal contact roller may be different, in particular with respect to surface roughness and/or material. The surface roughness of the distal contact roller may be higher than the one of the proximal contact roller. The surface roughness of the proximal contact roller may be higher than the one of the distal contact roller.

The widths of the distal contact roller and the proximal contact roller, measured in the direction of the mounting pivot axis, may be different.

The mounting structure may be moveable into a middle position, the middle position may be between the minimum position and the maximum position. When the mounting structure is in the middle position, the distal contact roller and the proximal contact roller may be configured to get into contact with the food product.

When the mounting structure is in the middle position, the distal contact roller and the proximal contact roller may be arranged substantially at the same height with respect to a direction orthogonal to the feed direction.

When the mounting structure is in the middle position, the distal contact roller and the traction roller may be configured to get into contact with the food product.

When the mounting structure is in the maximum position, the proximal contact roller and the traction roller may be configured to get into contact with the food product.

When the mounting structure is in the minimum position, the distal contact roller may be arranged lower than the proximal contact roller with respect to a direction orthogonal to the feed direction.

When the mounting structure is in the maximum position, the proximal contact roller may be arranged lower than the distal contact roller with respect to a direction orthogonal to the feed direction.

The distal contact roller may be arranged behind, in particular downstream of, the traction roller with respect to the feed direction. The proximal roller may be arranged in front of, in particular upstream of, the traction roller with respect to the feed direction.

The proximal contact roller, in particular the proximal roller axis, may be arranged lower than the mounting pivot axis with respect to a direction orthogonal to the feed direction.

The first mounting element may be connected to a first end of the proximal contact roller. The second mounting element may be connected to a second end of the proximal contact roller.

The radius of the proximal contact roller may be smaller than the radius of the traction roller. The radius of the traction roller may be larger than both the radius of the proximal contact roller and the radius of the distal contact roller.

The geometric arrangement of the distal contact roller and the proximal contact roller may limit the penetration depth of the traction roller into the food product.

The mounting structure may comprise a first mounting element and a second mounting element. The first mounting element and the second mounting element may be arranged on opposite sides of the distal contact roller with respect to the distal contact roller axis. The first mounting element may be connected to a first end of the distal contact roller. The second mounting element may be arranged to a second end of the distal contact roller.

The first mounting element and the second mounting element may be arranged on opposite sides of the traction roller with respect to the mounting pivot axis and/or the traction roller axis.

The link element may be a first link element and the feed apparatus further comprises a second link element. The link element may be connected to the first mounting element. The second link element may be connected to the second mounting element. The first and second link element may be identically shaped. The first and second link element may be connected via connection shaft. The protrusion may protrude from the connection shaft. A first protrusion may protrude from a first end of the connection shaft. A second protrusion may extend from a second end of the connection shaft.

The feed apparatus may be part of a food slicing machine for slicing food products. The food slicing machine may further comprise a slicing station. The slicing station may comprise a knife blade. The knife blade may be a rotating knife blade, in particular a circular or sickle blade. The feed apparatus may be configured to convey the food products towards the knife blade.

The distal contact roller may be adjacent to the knife blade. The distal contact roller may be in the vicinity of the knife blade. The distal contact roller may be arranged between the knife blade and the mounting pivot axis. The distal contact roller may be arranged between the knife blade and the traction roller, in particular the traction roller axis. The distance, in particular the distance in the feed direction, between the knife blade and the distal roller axis may be less than 15 centimeters, in particular less than 10 centimeters, in particular less than 5 centimeters, in particular less than 3 centimeters. The knife blade may define a cutting plane. The food products may be cut into slices at a cutting plane. The distance, in particular the distance in the feed direction, between the cutting plane and the distal roller axis may be less than 15 centimeters, in particular less than 10 centimeters, in particular less than 5 centimeters, in particular less than 3 centimeters. Arranging the distal contact roller in close proximity to the knife blade and/or the cutting plane may be beneficial in terms of efficiency with respect to conveying the food products.

The traction roller may be adjacent to the knife blade. The traction roller may be in the vicinity of the knife blade. The distance between the knife blade and the traction roller axis may be less than 20 centimeters, in particular less than 15 centimeters, in particular less than 10 centimeters, in particular less than 5 centimeters.

The feed apparatus may be arranged pivotably around a feed apparatus pivoting axis. The feed apparatus pivot axis may be in distance to the mounting pivot axis. The frame may be arranged pivotable around the feed apparatus pivoting axis.

Wherein the feed apparatus pivoting axis may be upstream of the mounting pivot axis regarding the feed direction. The feed apparatus pivoting axis may be upstream of the actuator. The actuator may be arranged between the feed apparatus pivot axis and the mounting structure pivot axis.

The food slicing machine may comprises multiple upper feed apparatuses, in particular according to the second aspect of the invention. In addition, the food slicing machine may comprise multiple lower feed apparatuses. Each upper feed apparatus may be arranged vertically above a corresponding lower feed apparatus.

The food slicing machine may comprise multiple upper feed apparatuses, in particular according to the second aspect of the invention. The food slicing machine may further comprise at least one lower feed apparatus. The upper feed apparatuses may be arranged vertically above the at least one lower feed apparatus.

The food slicing machine may comprise multiple lower feed apparatuses. Each upper feed apparatus may be arranged vertically above a corresponding lower feed apparatus. The number of upper feed apparatuses may be equal to the number of lower feed apparatuses. The number of upper feed apparatuses may be twice the number of lower feed apparatuses.

The upper feed apparatuses may be driven independently of each other. The lower feed apparatuses may be driven independently of each other.

The food slicing machine may comprise multiple feed lanes. Each feed lane may be configured to convey a food product towards the knife blade. Each feed lane may have one lower feed apparatus allocated to it. Each feed lane may have one upper feed apparatus allocated to it. Each feed lane may have two upper feed apparatuses, in particular two tractions rollers, allocated to it.

The feed apparatus may comprise two distal contact rollers. The two distal contact rollers may be arranged between the mounting pivot axis and the knife blade. The two distal contact rollers may be arranged downstream of the mounting pivot axis. The two distal contact rollers may be arranged downstream of each other.

The feed apparatus may comprise two proximal contact rollers. The two proximal contact rollers may be arranged between the mounting pivot axis and the actuator. The two proximal contact rollers may be arranged upstream of the mounting pivot axis. The two distal contact rollers may be arranged upstream of each other.

The construction space near the knife blade and/or the cutting plane may be limited. Due to the limited space, it may be necessary that the assembly of the traction roller, the distal contact roller and/or the proximal contact roller is sufficiently small. Using small diameters for the distal contact roller, the traction roller and/or the proximal contact roller may allow moving the distal contact roller, the traction roller and/or the proximal contact roller closer to the knife blade and/or the cutting plane. Moving the distal contact roller, the traction roller and/or the proximal contact roller closer to the knife blade and/or the cutting plane may allow guiding the distal end of the food product close to knife blade.

According to a third aspect of the invention, there is provided a method for conveying a food product along a feed direction to a slicing station of a food slicing machine, in particular of a food processing line. The food slicing machine may have the features as specified above. The method comprises the steps of moving a contact roller assembly into a first position. The contact roller assembly may comprise a proximal contact roller and a distal contact roller. The food product is conveyed towards the contact roller assembly, such that the distal contact roller gets into contact with the food product, in particular an upper surface of the food product, and is pushed upwards by the food product, such that the contact roller assembly is pivoted in a first pivoting direction around a mounting pivot axis into a second position, such that the proximal contact roller gets into contact with the food product, in particular an upper surface of the food product. In the second position, the distal contact roller and the proximal contact roller may be in contact with the food product, in particular an upper surface of the food product. The method further comprises the steps of conveying the food product towards the slicing station. Then the contact roller assembly may be pivoted, in particular by an actuator, against the first pivoting direction around the mounting structure. Alternatively or in addition, the further movement of the contact roller assembly in the first pivoting direction around the mounting pivot axis may be prevented, in particular by an actuator.

The actuator may be an actuator as described regarding the second aspect of the invention.

The actuator may comprise a pneumatic cylinder. The pivot movement of the contact roller assembly against the first pivoting direction may be achieved via a pneumatic control, in particular pneumatic feedback control. The slicing machine may comprise a control unit. The control unit may be configured to control and adjust the actuator.

The food product may be conveyed through a traction roller located between the proximal contact roller and the distal contact roller. The traction roller may be a traction roller as described in the first aspect of the invention.

In the step of pivoting the contact roller assembly against the first pivoting direction and/or preventing further movement of the contact roller assembly in the first pivoting direction around the mounting pivot axis, the actuator may actively pivot the contact roller assembly against the first pivoting direction and/or prevents further movement of the contact roller assembly in the first pivoting direction.

In the step of pivoting the contact roller assembly against the first pivoting direction, the actuator may actively pivot the contact roller assembly against the first pivoting direction. In the step preventing further movement of the contact roller assembly in the first pivoting direction around the mounting pivot axis, the actuator may actively prevent further movement of the contact roller assembly in the first pivoting direction.

The food product may be conveyed, in particular the rest of the food product, may be conveyed towards the slicing station. After the step of pivoting the contact roller assembly against the first pivoting direction and/or preventing further movement of the contact roller assembly in the first pivoting direction around the mounting pivot axis, the food product may be conveyed, in particular the rest of the food product, may be conveyed towards the slicing station. After the step of pivoting the contact roller assembly against the first pivoting direction, the food product may be conveyed, in particular the rest of the food product, may be conveyed towards the slicing station. After the step preventing further movement of the contact roller assembly in the first pivoting direction around the mounting pivot axis, the food product may be conveyed, in particular the rest of the food product, may be conveyed towards the slicing station.

According to a fourth aspect of the invention, there is provided a feed apparatus for feeding a food product along a feed direction to a slicing station of a food slicing machine, in particular as specified above. The feed apparatus comprises a mounting structure, a distal contact roller, a proximal contact roller and a traction roller. The mounting structure is pivotable around a mounting pivot axis. The distal contact roller is mounted on the mounting structure and arranged to rotate about a distal contact roller axis. The distal contact roller axis is in a distance to the mounting pivot axis. The proximal contact roller is mounted on the mounting structure and arranged to rotate about a proximal contact roller axis. The proximal contact roller axis is in a distance to the mounting pivot axis. The traction roller may be arranged in between the distal contact roller and the proximal contact roller. The traction roller may extend through a tangential plane that tangential to both the proximal contact roller and the distal contact roller at the side of the food product. The tangential plane may be tangential to a lower side of the distal contact roller and a lower side of the proximal contact roller, in particular with respect to a direction orthogonal to the feed direction. The tangential plane may be tangential to a circumferential surface of the distal contact roller that is facing the food product. The tangential plane may be tangential to a circumferential surface of the distal contact roller that is facing the food product.

The slicing machine and the feed apparatus may be part of a food processing line. The feed apparatus may feed the food products in a feeding direction. The food processing line may comprise multiple processing stations subsequently arranged in the feed direction. The slicing machine may comprise the feed apparatus. The food processing line may comprise a packaging unit arranged downstream of the slicing machine.

The traction roller may extend at least 1 millimeter, in particular at least 5 millimeters, in particular at least 10 millimeters, through a plane tangential to both the proximal contact roller and the distal contact roller at the side of the food product.

The axes of the distal contact roller and the proximal contact roller, in particular the distal contact roller axis and the proximal contact roller axis, may be arranged in a first plane. The axis of the traction roller, in particular the traction roller axis, may be arranged at an orthogonal distance to the first plane. The orthogonal distance may be the minimum distance between the axis of the traction roller and the first plane. The radius of the traction roller may be greater than said orthogonal distance plus the radius of the distal contact roller. The radius of the traction roller may be greater than said orthogonal distance plus the radius of the proximal contact roller.

The proximal contact roller may be arranged in front, in particular upstream, of the mounting pivot axis with respect to the feed direction. The distal contact roller may be arranged behind, in particular downstream of, the mounting pivot axis with respect to the feed direction.

The apparatus according to the first, second or fourth aspect of the invention may be used using method steps of the method according to third aspect of the invention. The method according to the third aspect of the invention may be performed with an apparatus according to the first, second or third aspect of the invention. The apparatus according to the first aspect of the invention may additionally comprise parts of the apparatus according to the second and/or fourth aspect of the invention. The apparatus of the second aspect of the invention may additionally comprise parts of the apparatus according to the first and/or fourth aspect of the invention. The apparatus of the fourth aspect of the invention may additionally comprise parts of the apparatus according to the first and/or second aspect of the invention.

The expressions "first", "second", "third" and "fourth" are to be understood merely as designations for a particular element or component and may not necessarily indicate a particular order or arrangement of said components or elements. For example, the existence of a fourth element/component does not necessarily imply the existence of a first, second or third element/component, and vice versa.

The invention is defined in the claims. However, below there is provided a non-exhaustive list of non-limiting examples. Any one or more of the features of these examples may be combined with any one or more features of another example, embodiment, or aspect described herein.

Example Ex1: Feed apparatus for feeding food products to a slicing station of a food slicing machine, comprising a drive having a drive shaft adapted to rotate about a drive shaft axis, a traction roller arranged to rotate about a traction roller axis, wherein the traction roller is configured to contact a food product, in particular an upper surface of said food product, and to support conveying said food product towards the slicing station, a transmission configured to transmit a rotation of the drive shaft to the traction roller, wherein the drive shaft axis of the drive shaft is non-parallel to the traction roller axis of the traction roller.

Example Ex2: Feed apparatus for feeding food products to a slicing station of a food slicing machine, comprising a drive having a drive shaft adapted to rotate about a drive shaft axis, a traction roller arranged to rotate about a traction roller axis, wherein the traction roller is configured to contact a food product, in particular an upper surface of said food product, and to support conveying said food product towards the slicing station, a transmission configured to transmit a rotation of the drive shaft to the traction roller, wherein the drive shaft axis of the drive shaft is non-parallel to the traction roller axis of the traction roller.

Example Ex3: Feed apparatus for feeding a food product along a feed direction to a slicing station of a food slicing machine, comprising a mounting structure, wherein the mounting structure is pivotable around a mounting pivot axis, a distal contact roller mounted on the mounting structure and arranged to rotate about a distal contact roller axis, wherein the distal contact roller axis is in a distance to the mounting pivot axis, a proximal contact roller mounted on the mounting structure and arranged to rotate about a proximal contact roller axis, wherein the proximal contact roller axis is in a distance to the mounting pivot axis, a traction roller arranged in between the distal contact roller and the proximal contact roller, wherein the traction roller extends through a plane tangential to both the proximal contact roller and distal contact roller at the side of the food product.

Example Ex4: Feed apparatus according to any one of the previous examples, wherein the traction roller is adapted to contribute to conveying the feed product towards the slicing station.

Example Ex5: Feed apparatus according to any one of the previous examples, wherein the traction roller comprises a rotation shaft, a circumferential traction surface and/or a side surface.

Example Ex6: Feed apparatus according to any one of the previous examples, wherein the traction roller comprises at least two discrete circumferential traction surfaces.

Example Ex7: Feed apparatus according to any one of the previous examples, wherein the feed apparatus is free of conveyor belts and/or drive belts.

Example Ex8: Feed apparatus according to any one of the previous examples, wherein the feed apparatus is an upper feed apparatus arranged above the food product.

Example Ex9: Feed apparatus according to any one of the previous examples, wherein the transmission directly or indirectly transmits a rotation or torque of the drive shaft to the traction roller.

Example Ex10: Feed apparatus according to any one of the previous examples, wherein a projection of the traction roller axis onto a horizontal plane is orthogonal to a projection of the drive shaft onto said horizontal plane.

Example Ex11: Feed apparatus according example Ex10, wherein the projection direction is orthogonal to the horizontal plane.

Example Ex12: Feed apparatus according to any one of the previous examples, wherein the drive shaft axis and the traction roller axis interest.

Example Ex12: Feed apparatus according to any one of the previous examples, wherein the drive shaft axis and the traction roller axis are orthogonal to each other.

Example Ex13: Feed apparatus according to any one of the previous examples, wherein the transmission comprises or consists of a gear transmission, in particular a bevel gear or a worm drive.

Example Ex14: Feed apparatus according to any one of the previous examples, wherein the transmission is arranged directly in between the drive shaft and traction roller.

Example Ex15: Feed apparatus according to any one of the previous examples, wherein the transmission comprises or consists of a first transmission element and a second transmission element, wherein the first transmission element is connected to the drive shaft or integrally formed in the drive shaft, wherein the second transmission element is connected to the traction roller or integrally formed in the traction roller.

Example Ex16: Feed apparatus according to example Ex15, wherein the first transmission element is directly or indirectly connected to the drive shaft or integrally formed in the drive shaft, in particular at an end of the drive shaft that is adjacent to the traction roller.

Example Ex17: Feed apparatus according to example Ex15 or Ex16, wherein the first transmission element integrally rotates with the drive shaft.

Example Ex18: Feed apparatus according to any one examples Ex15 to Ex17, wherein first transmission element transmits rotation to the second transmission element via friction and/or a form-fitting engagement.

Example Ex19: Feed apparatus according to any one examples Ex15 to Ex18, wherein the first transmission element comprises a first transmission surface, wherein the second transmission element comprises a second transmission surface, wherein the first transmission surface is configured to mate with the second transmission surface, such that the rotation of the drive shaft can be transmitted to the traction roller.

Example Ex20: Feed apparatus according to example Ex19, wherein the first transmission surface comprises teeth configured to mate with teeth of the second transmission surface.

Example Ex21: Feed apparatus according to example Ex19 or Ex20, wherein rotation of the drive shaft is transmitted to the traction roller via friction between the first transmission surface and the second transmission surface.

Example Ex22: Feed apparatus according to any one of examples Ex15 to Ex21, wherein the first transmission element is a bevel wheel arranged at the drive shaft and the second transmission element is a bevel wheel or bevel ring arranged at the traction roller, in particular at a rotation shaft or a side surface of the traction roller.

Example Ex23: Feed apparatus according to any one of examples Ex15 to Ex22, wherein the first transmission element is a worm, in particular a worm screw, arranged at the drive shaft and the second transmission element is a worm gear, in particular a worm wheel, arranged at the traction roller, in particular at a rotation shaft of the traction roller.

Example Ex24: Feed apparatus according to any one of examples Ex15 to Ex23, wherein the second transmission surface forms part of a bevel wheel, a bevel ring or a worm wheel.

Example Ex25: Feed apparatus according to any one of examples Ex15 to Ex24, wherein the worm wheel comprises worm teeth, wherein the worm teeth are formed directly onto the rotation shaft.

Example Ex26: Feed apparatus according to any one of examples Ex15 to Ex25, wherein teeth of the first transmission surface are arranged at an angle with respect to the second axis.

Example Ex27: Feed apparatus according to example Ex5 or Ex6, wherein the circumferential traction surface of the traction roller is corrugated, rippled or comprises teeth.

Example Ex28: Feed apparatus according to any one of examples Ex25 or Ex27, wherein the teeth have a curved shape, in particular a helical shape.

Example Ex29: Feed apparatus according to any one of the previous examples, wherein the traction roller comprises a rotation shaft, a first roller and a second roller, wherein the first roller and the second roller are connected to the rotation shaft.

Example Ex30: Feed apparatus according to example Ex29, wherein the rotation shaft extends along the traction roller axis.

Example Ex31: Feed apparatus according to any one of the previous examples, wherein the drive shaft primarily extends in a first, in particular vertical, plane, wherein the first plane is orthogonal to the traction roller axis.

Example Ex32: Feed apparatus according to any one of the previous examples, wherein the drive comprises or consists of a motor, in particular an electromotor, in particular a servomotor.

Example Ex33: Feed apparatus according to any one of the previous examples, wherein the traction roller conveys the food product along a feed direction, wherein the drive shaft primarily extends in a plane defined by the feed direction and a direction orthogonal to the feed direction.

Example Ex34: Feed apparatus according to example Ex33, wherein the direction orthogonal to the feed direction is the vertical direction.

Example Ex35: Feed apparatus according to example Ex33 or Ex34, wherein the feed direction is parallel to the first plane.

Example Ex36: Feed apparatus according to any one of examples Ex33 to Ex35, wherein a projection of the feed direction onto a horizontal plane is parallel to a projection of the drive and/or the drive shaft onto the horizontal plane.

Example Ex37: Feed apparatus according to any one of the previous examples, wherein the feed apparatus further comprises a frame, wherein the traction roller, the drive shaft and the drive are arranged on the frame.

Example Ex38: Feed apparatus according to example Ex37, wherein the frame is pivotally arranged around a feed apparatus pivot axis.

Example Ex39: Feed apparatus according to any one of the previous examples, wherein, in use, the traction roller is arranged vertically above the food product.

Example Ex40: Feed apparatus according to any one of the previous examples, wherein the feed apparatus further comprises a cover element extending partially around the traction roller axis.

Example Ex41: Feed apparatus according to example Ex40, wherein the cover element is configured to protect the transmission element from contaminations and dirt.

Example Ex42: Feed apparatus according to example Ex40 or Ex41, wherein the cover element is a metal sheet or a plastic sheet.

Example Ex43: Feed apparatus according to any one of example Ex40 to Ex42, wherein the cover element is mounted on a mounting structure that is connected to the frame.

Example Ex44: Feed apparatus according to any one of example Ex40 to Ex43, wherein the cover element extends circumferentially around the traction roller axis, in particular spanning an angle of at least 90 degrees, in particular at least 120 degrees, in particular at least 180 degrees

Example Ex45: Feed apparatus according to any one of example Ex40 to Ex44, wherein the cover element is arranged at least partially below the rotation shaft of the traction roller.

Example Ex46: Feed apparatus according to any one of the previous examples, wherein the feed apparatus comprises a coupling interface, wherein the coupling interface is arranged in or adjacent to the drive shaft or the transmission, wherein an assembly of the feed apparatus comprising at least the traction roller, is adapted to be detachable from the rest of the feed apparatus via the coupling interface.

Example Ex47: Feed apparatus according to any one of the previous examples, wherein the actuator is configured to restrict or provide a resistance against the pivoting movement of the mounting structure in at least a first pivoting direction.

Example Ex48: Feed apparatus according to any one of the previous examples, wherein the actuator is configured to adjust the resistance against the pivoting movement of the mounting structure in a first pivoting direction and/or a second pivoting direction.

Example Ex49: Feed apparatus according to example Ex47 to Ex48, wherein the actuator is configured to adjust a position, where the pivoting movement of the mounting structure in the first pivoting direction is restricted.

Example Ex50: Feed apparatus according to any one of the previous examples, wherein the distal contact roller is arranged downstream of the mounting pivot axis with respect to the feed direction.

Example Ex50: Feed apparatus according to any one of the previous examples, wherein the actuator comprises a cylinder, in particular a pneumatic cylinder.

Example Ex51: Feed apparatus according to example Ex50, wherein the cylinder is configured to prevent the movement of the mounting structure in the first pivoting direction or to provide a resistance against the movement of the mounting structure in the first pivoting direction.

Example Ex52: Feed apparatus according to any one of the previous examples, wherein the feed apparatus comprises a link element connected to the mounting structure at a radial distance with respect to the mounting pivot axis, wherein the actuator is configured to restrict or provide a resistance against the movement of the link element in a first link element direction.

Example Ex53: Feed apparatus according to example Ex52, wherein the link element is connected to the mounting structure at a connection point, wherein the connection point is arranged higher than the mounting pivot axis with respect to a direction orthogonal to the feed direction

Example Ex54: Feed apparatus according previous example Ex53, wherein the connection point is arranged lower than the mounting pivot axis with respect to a direction orthogonal to the feed direction.

Example Ex55: Feed apparatus according to any one of examples Ex52 to Ex54, wherein actuator is configured to limit the movement of the link element and/or to provide a stop of the link element.

Example Ex56: Feed apparatus according to any one of examples Ex52 to Ex55, wherein the actuator is configured to provide a stop for the link element.

Example Ex57: Feed apparatus according to any one examples Ex52 to Ex56, wherein the link element is arranged between the actuator and the mounting structure, in particular the mounting pivot axis of the mounting structure.

Example Ex58: Feed apparatus according to any one of the previous examples, wherein the feed apparatus comprises a traction roller arranged to rotate about a traction roller axis, wherein the traction roller is configured to get into contact with the food product and to convey said food product towards the slicing station.

Example Ex59: Feed apparatus according to any example Ex58, wherein the traction roller axis coincides with the mounting pivot axis.

Example Ex60: Feed apparatus according to example Ex58 or Ex59, wherein a radius of the traction roller is greater than a radius of the distal contact roller.

Example Ex61: Feed apparatus according to any one of the previous examples, wherein the actuator is configured to adjust a penetration depth of the traction roller into the food product.

Example Ex61: Feed apparatus according to any one of the previous examples, wherein the actuator is configured to control, in particular using feedback control, a penetration depth of the traction roller into the food product.

Example Ex61: Feed apparatus according to any one of the previous examples, wherein the traction roller is driven by a drive, in particular an electro motor.

Example Ex62: Feed apparatus according to any one of the previous examples, wherein the distal contact roller is arranged lower than the mounting pivot axis or the traction roller axis with respect to a direction orthogonal to the feed direction

Example Ex63: Feed apparatus according to any one of the previous examples, wherein the mounting structure is limited in its movement between a minimum position and a maximum position.

Example Ex64: Feed apparatus according to example Ex63, wherein the actuator is configured to adjust the minimum position and/or the maximum position.

Example Ex65: Feed apparatus according to example Ex63 or Ex64, wherein the actuator is configured to restrict movement of the mounting structure towards the maximum position.

Example Ex66: Feed apparatus according to any one of examples Ex63 to Ex65, wherein the actuator is configured to provide a resistance against movement of the mounting structure towards the maximum position.

Example Ex67: Feed apparatus according to any one of examples Ex63 to Ex65, wherein, when the mounting structure is in the minimum position, the distal contact roller is configured to get into contact with the food product.

Example Ex68: Feed apparatus according to any one of the previous examples Ex63 to Ex67, wherein the feed apparatus comprises a frame, wherein the frame or the link element comprises a slot hole, wherein the other one of the link element and the frame comprises a protrusion extending into the slot hole, wherein the interaction between the slot hole and the protrusion limits movement of the mounting structure between the minimum position and the maximum position.

Example Ex69: Feed apparatus according to example Ex68, wherein, when the mounting structure is in the minimum position, the protrusion is arranged at a distal end of the slot hole that is further away from the mounting structure.

Example Ex70: Feed apparatus according to example Ex68 or Ex70, wherein, when the mounting structure is in the maximum position, the protrusion is arranged at a proximal end of the slot hole that is closer to the mounting structure.

Example Ex71: Feed apparatus according to any one of examples Ex68 to Ex70, wherein the actuator is configured to prevent movement of the protrusion towards the distal end of the slot hole.

Example Ex72: Feed apparatus according to example Ex71, wherein the actuator is configured to adjust a position, where movement of the protrusion towards the distal end of the slot hole is prevented.

Example Ex73: Feed apparatus according to any one of examples Ex68 to Ex72, wherein the actuator is configured to adjust a resistance against movement of the protrusion towards the distal end of the slot hole.

Example Ex74: Feed apparatus according to any one of the previous examples, wherein the feed apparatus comprises a proximal contact roller mounted on the mounting structure and arranged to rotate about a proximal contact roller axis, wherein the proximal contact roller axis is in a distance to the mounting pivot axis.

Example Ex75: Feed apparatus according to example Ex74, wherein the proximal contact roller is arranged in front of the mounting pivot axis with respect to the feed direction.

Example Ex76: Feed apparatus according to example Ex74 or Ex75, wherein the proximal contact roller is arranged between the actuator and the traction roller.

Example Ex77: Feed apparatus according to any one of the previous examples, wherein the mounting structure comprises a first mounting element and a second mounting element, wherein the first mounting element and the second mounting element are arranged on opposite sides of the distal contact roller with respect to the distal contact roller axis, wherein the first mounting element is connected to a first end of the distal contact roller, wherein the second mounting element is connected to a second end of the distal contact roller.

Example Ex78: Feed apparatus according to example Ex77, wherein the link element is a first link element and the feed apparatus comprises a second link element, wherein the first link element is connected to the first mounting element and the second link element is connected to the second mounting element.

Example Ex79: Feed apparatus according to any one of the previous examples, wherein the mounting pivot axis, the distal contact roller axis, the proximal contact roller axis and the traction roller rotation axis extend parallel to each other.

Example Ex80: Feed apparatus according to any one of the previous examples, wherein the mounting structure is moveable into a middle position, wherein the middle position is between the minimum position and the maximum position, wherein, when the mounting structure is in the middle position, the distal contact roller and the proximal contact roller are configured to get into contact with the food product.

Example Ex81: Feed apparatus according to example Ex80, wherein when the mounting structure is in the middle position, the distal contact roller and the proximal contact roller are arranged substantially at the same height with respect to a direction orthogonal to the feed direction.

Example Ex82: Feed apparatus according to example Ex80 or Ex81, wherein when the mounting structure is in the minimum position, the distal contact roller and the traction roller are configured to get into contact with the food product.

Example Ex83: Feed apparatus according to any one of examples Ex80 to Ex82, wherein when the mounting structure is in the maximum position, the proximal contact roller and the traction roller are configured to get into contact with the food product.

Example Ex84: Feed apparatus according to any one of examples Ex80 to Ex83, wherein when the mounting structure is in the minimum position, the distal contact roller is arranged lower than the proximal contact roller with respect to a direction orthogonal to the feed direction.

Example Ex85: Feed apparatus according to any one of examples Ex80 to Ex84, wherein when the mounting structure is in the maximum position, the proximal contact roller is arranged lower than the distal contact roller with respect to a direction orthogonal to the feed direction.

Example Ex86: Feed apparatus according to any one of examples Ex80 to Ex85, wherein the distal contact roller is arranged behind the traction roller with respect to the feed direction and the proximal roller is arranged in front of the traction roller with respect to the feed direction.

Example Ex87: Feed apparatus according to any one of examples Ex80 to Ex86, wherein the proximal contact roller is arranged lower than the mounting pivot axis with respect to a direction orthogonal to the feed direction.

Example Ex88: Feed apparatus according to any one of examples Ex80 to Ex87, wherein the first mounting element is connected to a first end of the proximal contact roller, wherein the second mounting element is connected to a second end of the proximal contact roller.

Example Ex89: Feed apparatus according to any one of examples Ex80 to Ex89, wherein the radius of the proximal contact roller is smaller than the radius of the traction roller.

Example Ex90: Feed apparatus according to any one of examples Ex80 to Ex89, wherein the geometric arrangement of the distal contact roller and the proximal contact roller limits the penetration depth of the traction roller into the food product.

Example Ex91: Feed apparatus according to any one of the previous examples, wherein the traction roller extends at least 1 millimeter, in particular at least 5 millimeters, in particular at least 10 millimeters, through a plane tangential to both the proximal contact roller and distal contact roller at the side of the food product.

Example Ex92: Feed apparatus according to any one of the previous examples, wherein the axes of the distal contact roller and the proximal contact roller are arranged in a first plane, wherein the axis the traction roller is arranged at an orthogonal distance to the first plane, wherein the radius of the traction roller is greater than the orthogonal distance and the radius of the distal contact roller or proximal contact roller.

Example Ex93: Feed apparatus according to any one of the previous examples, the proximal contact roller is arranged in front of the mounting pivot axis with respect to the feed direction.

Example Ex94: Feed apparatus according to any one of the previous examples, the distal contact roller is arranged behind the mounting pivot axis with respect to the feed direction.

Example Ex95: Food slicing machine for slicing food products comprising a slicing station comprising a knife blade, and a feed apparatus according to any one of the previous examples, wherein the feed apparatus is configured to convey the food products towards the knife blade.

Example Ex96: Food slicing machine according to example Ex95, wherein the feed apparatus is arranged pivotably around a feed apparatus pivoting axis, which is in distance to the traction roller and/or the mounting pivot axis.

Example Ex97: Food slicing machine according to example Ex95 or Ex96, wherein the feed apparatus is an upper feed apparatus, and the food slicing machine further comprises a lower feed apparatus and/or a rear feed apparatus.

Example Ex98: Food slicing machine according to any one of examples Ex95 to Ex97, wherein the lower feed apparatus comprises a conveyor belt and/or traction rollers.

Example Ex99: Food slicing machine according to any one of examples Ex95 to Ex98, wherein the traction roller is arranged adjacent to the knife blade, in particular between the knife blade and the drive shaft.

Example Ex100: Food slicing machine according to any one of examples Ex95 to Ex99, wherein the food slicing machine comprises multiple upper feed apparatuses according to any one of examples Ex1 to Ex94 and at least one lower feed apparatus, wherein the upper feed apparatuses are arranged vertically above the at least one lower feed apparatus

Example Ex101: Food slicing machine according to example Ex100, comprising multiple lower feed apparatuses, wherein each upper feed apparatus is arranged vertically above a corresponding lower feed apparatus.

Example Ex102: Food slicing machine according to example Ex100 or Ex101, wherein the upper feed apparatuses can be driven independently of each other and/or wherein the lower feed apparatuses can be driven independently of each other.

Example Ex103: Food slicing machine according to example Ex96, wherein the feed apparatus pivoting axis is upstream of the mounting pivot axis regarding the feed direction.

Example Ex104: Method for conveying a food product along a feed direction to a slicing station of a food slicing machine, comprising moving a contact roller assembly, comprising a proximal contact roller and a distal contact roller, into a first position, conveying the food product towards the contact roller assembly, such that the distal contact roller gets into contact with the food product and is pushed upwards by the food product, such that the contact roller assembly is pivoted in a first pivoting direction around a mounting pivot axis into a second position, such that the proximal contact roller gets into contact with the food product,- conveying the food product towards the slicing station, and pivoting the contact roller assembly against the first pivoting direction and/or preventing further movement of the contact roller assembly in the first pivoting direction around the mounting pivot axis.

Example Ex105: Method according to example Ex104, wherein the food product is conveyed through a traction roller located between the proximal and distal contact roller.

Example Ex106: Method according to example Ex104 or Ex105, wherein in the step of pivoting the contact roller assembly against the first pivoting direction and/or preventing further movement of the contact roller assembly in the first pivoting direction around the mounting pivot axis, an actuator actively pivots the contact roller assembly against the first pivoting direction and/or prevents further movement of the contact roller assembly in the first pivoting direction.

Example Ex107: Method according to any one of examples Ex104 to Ex106, further comprising conveying the food product, in particular the rest of the food product, towards the slicing station.

Examples will now be further described with reference to the figures in which:
Figure 1 shows a perspective view of a food processing line.
Figure 2 shows a perspective view of a slicing machine comprising a feed apparatus according to an embodiment of the invention.
Figure 3 shows a detail view of part of the slicing machine of Fig. 2
Figure 4 shows a detail view of a feed apparatus according to an embodiment of the invention.
Figure 5 shows a cut through the feed apparatus of Fig. 4.
Figure 6 is a detail view of part of a feed apparatus according to an embodiment of the invention.
Figure 7 shows a mounting structure of a feed apparatus according to an embodiment of the invention in a minimum position.
Figure 8 shows the mounting structure of Fig. 7 in a maximum position.
Figure 9 shows a schematic top view of a section of a feed apparatus according to an embodiment of the invention.
Figure 10 shows a schematic top view of a section of a feed apparatus according to an embodiment of the invention.
Figure 11 shows a schematic top view of a section of a feed apparatus according to an embodiment of the invention.
Figure 12 shows a side view of the feed apparatus of Fig. 11.
Figure 13 shows a schematic side view of part of a feed apparatus according to an embodiment of the invention.

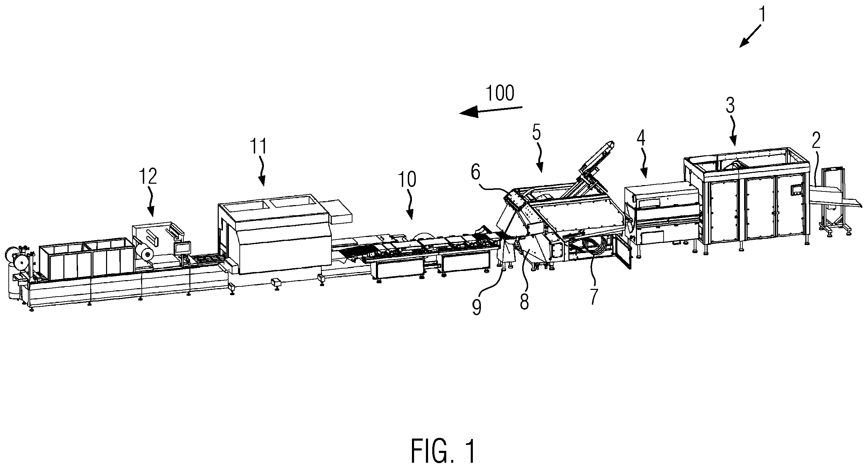

Fig. 1 shows a perspective view of a food processing line 1 with several processing stations along a feed direction 100. A food block 2, for example a cheese block or a block of ham, is fed to a block divider 3 to be divided, for example, into four elongated food products, each of which has a smaller height, width and/or length than the original food block 2. The food products are then analyzed in a scanner 4, for example an X-ray scanner. For example, the outer dimensions of the food products may be recorded and/or their inner density structure may be determined. In the subsequent food slicing machine 5, the food products are sliced into food slices by means of a slicing station 6.

Separator sheets can be inserted between the slices by means of a separator sheet inserter 7, also known as an interleaver. The cut food slices fall onto a portioning unit 8, which determines the arrangement and number of slices of a food portion by the movement of its conveyor unit. A continuous check weighing device 9 controls the weight of the food portions. A desired number of food portions can be lined up on a subsequent buffer 10 in order to then process portion groups or format sets in the further processing stations. In a loading station 11, the food portions are placed in packaging trays, in particular by a picker robot or a belt conveyor. In a subsequent packaging unit 12, the packaging trays are closed, for example sealed. The closed packages are then labeled and may be gathered in shipment packages.

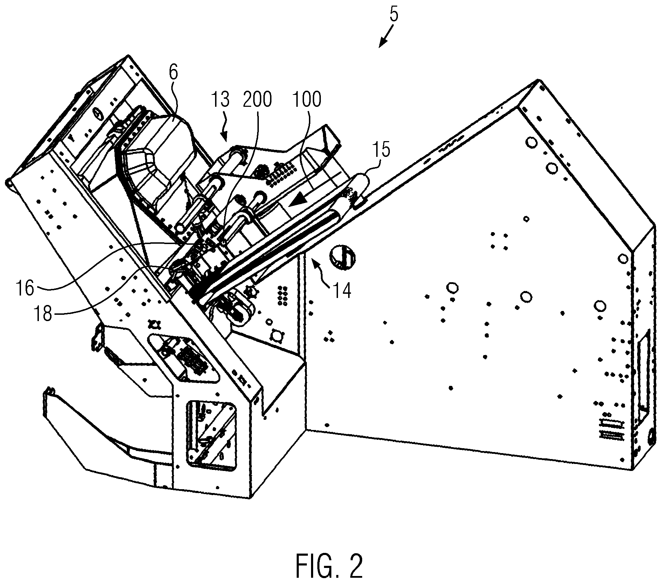

Fig. 2 shows a perspective view a slicing machine 5 of the food processing line 1 shown in Fig. 1. The slicing machine 5 comprises a slicing station 6 and an upper feed apparatus, further denoted as feed apparatus 13. The slicing machine 5 further comprises a lower feed apparatus 14 comprising a lower feed conveyor belt 15. The feed apparatus 13 and the lower feed apparatus 14 convey a food product (not shown) along the feed direction 100 towards the slicing station 6. The feed apparatus 13 comprises a frame 16 that is pivotably arranged about a feed apparatus pivot axis 200. A traction roller 17 is arranged at the downstream end of the frame 16 and is thus pivotable together with the frame 16 around the feed apparatus pivot axis 200.

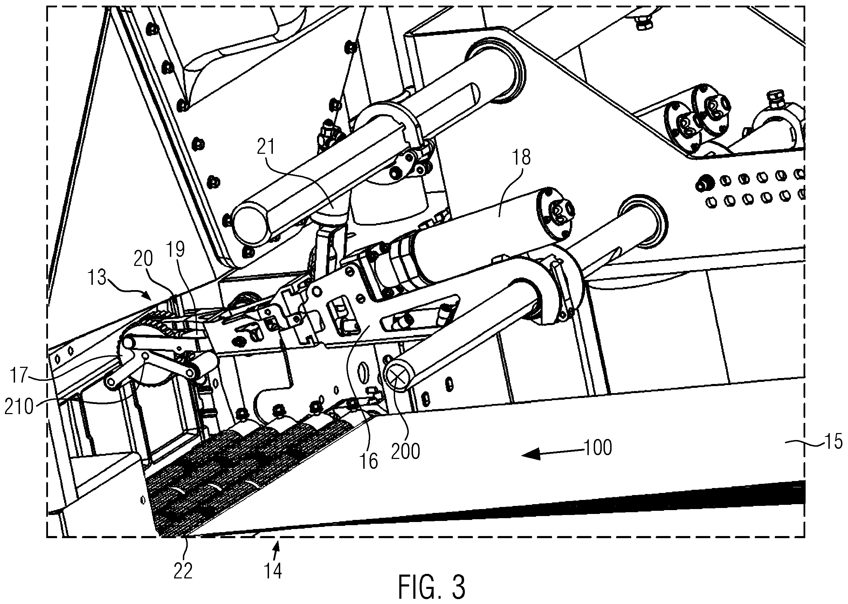

Fig. 3 shows a detail view of part of the slicing machine 5 of Fig. 2. A drive 18 is mounted on the frame 16. A drive shaft 19 is connected to the drive 18 and extends towards the traction roller 17. The drive shaft 19 is configured to rotate about a drive shaft axis 300. A transmission 20 is arranged between the drive shaft 19 and the traction roller 17. The transmission 20 is adapted to transmit the rotation of the drive shaft 19 to the traction roller 17, such that the traction roller 17 rotates about a traction roller axis 210. The feed apparatus 13 or the slicing machine 5 further comprises an upper actuator 21. The upper actuator 21 is configured to pivot the feed apparatus 13, in particular the frame 16, around the feed apparatus pivot axis 200, in particular to apply a pressure onto the food product. The upper actuator 21 is arranged between the feed apparatus pivot axis 200 and the traction roller 17. The lower feed apparatus 14 further comprises a lower feed traction roller assembly 22 arranged downstream of the lower feed conveyor belt 15. The lower feed traction roller assembly 22 comprises several traction rollers.

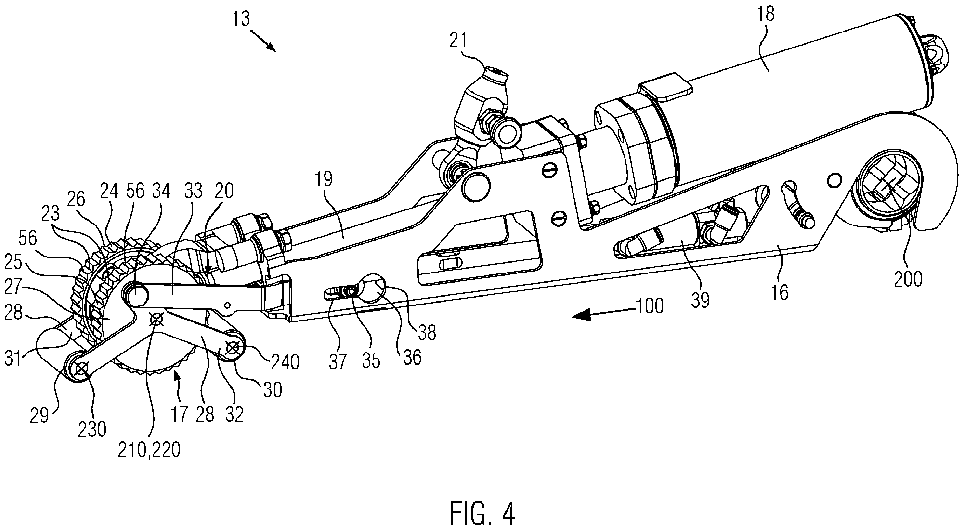

Fig. 4 shows a detail view of a feed apparatus 13 according to an embodiment of the invention. As described above, the frame 16 is pivotable around the feed apparatus pivot axis. The drive 18 and the traction roller 17 are both mounted on the frame 16. The drive 18 drives the drive shaft 19, such that the drive shaft 19 rotates about the drive shaft axis 300. The transmission 20 is arranged between the drive shaft 19 and the traction roller 17 and is adapted to transmit the rotation of the drive shaft 19 to the traction roller 17. The traction roller 17 comprises a circumferential traction surface 23, in particular a first circumferential traction surface 24 and a second circumferential traction surface 25. In particular, the traction roller 17 comprises a first roller 26 and a second roller 27. The first circumferential traction surface 24 forms part of the first roller 26. The second circumferential traction surface 25 forms part of the first roller 27.

In some embodiments, the feed apparatus 13 further comprises a mounting structure 28 that is pivotable around a mounting pivot axis 220. The mounting pivot axis 220 coincides with the traction roller axis 210. The feed apparatus 13 further comprises a distal contact roller 29 that is adapted to rotate about a distal contact roller axis 230. The feed apparatus 13 may comprise a proximal contact roller 30 that is adapted to rotate about a proximal contact roller axis 240. The distal contact roller 29 is mounted on the mounting structure 28. The proximal contact roller 30 is mounted on the mounting structure 28. In particular, the mounting structure 28 comprises a first mounting element 31 and a second mounting element 32. The first mounting element 31 and the second mounting element 32 are arranged on opposite sides of the traction roller 17. The first mounting element 31 is connected to a first end of the distal contact roller 29 and a first end of the proximal contact roller 30. The second mounting element 32 is connected to a second end of the distal contact roller 29 and a second end of the proximal contact roller 30.

In some embodiments, the feed apparatus 13 further comprises a link element 33. The link element 33 is connected to the mounting structure 28 at a connection point 34. The connection point 34 is located at a radial distance with respect to the mounting pivot axis 220. Due to the connection to the mounting structure 28, the link element 33 is pivotable about the mounting pivot axis 220. The link element 33 comprises a protrusion 35. The protrusion 35 is arranged adjacent to an end of the link element 33 that is on an opposite side than the connection point 34. The protrusion 35 extends into a slot hole 36 of the frame 16. The slot hole has a proximal end 37 and a distal end 38. The proximal end 37 is arranged closer to the mounting pivot axis 220 than the distal end 38. The protrusion 35 is moveable within the slot hole 36 between the proximal end 37 and the distal end 38. When the protrusion 35 is arranged at the proximal end 37, the mounting structure 28 is in a minimum position. When the protrusion 35 is arranged at the distal end 38, the mounting structure 28 is in a maximum position. Alternatively, the frame 16 may comprise the protrusion 35 and the link element 33 may comprise the slot hole 36.

In some embodiments, the feed apparatus 13 further comprises an actuator 39. The actuator 39 is configured to adjust the pivotability of the mounting structure 28 around the mounting pivot axis 220. In particular, the actuator 39 is directly or indirectly connected to the link element 33 or provides a stop for the link element 33. The actuator 39 may be adapted to adjust the position of the stop for the link element 33.

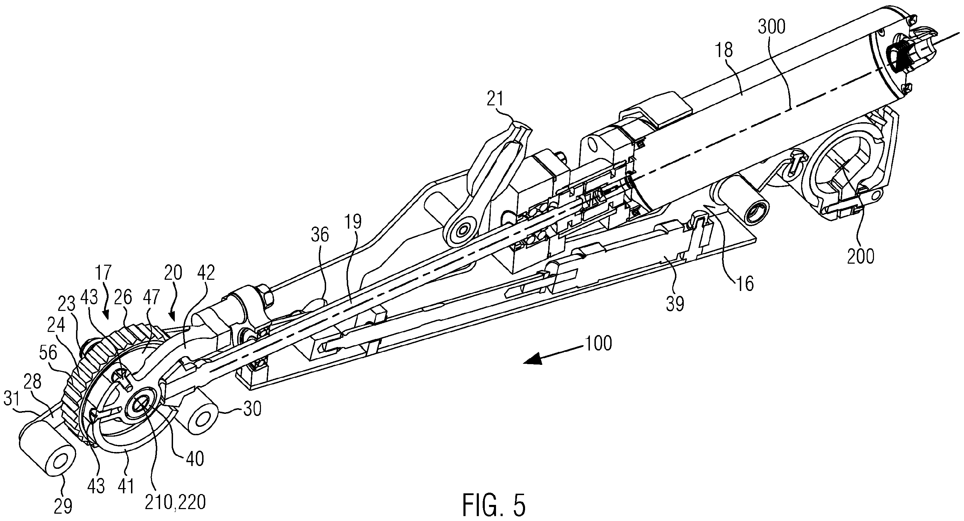

Fig. 5 shows a cut through the feed apparatus 13 shown in Fig. 4. In Fig. 5, only the first roller 26 of the traction roller 17 is shown. The first roller 26 and the second roller 27 are connected via a rotation shaft 40. The rotation shaft 40 extends along and around the traction roller axis 210.

In some embodiments, the feed apparatus 13 comprises a cover element 41. The cover element 41 extends at a radial distance partially around the traction roller axis 210. The cover element 41 is mounted on a cover element mounting structure 42. The cover element mounting structure 42 extends around the rotation shaft 41 of the traction roller 17, but is de-coupled from the rotation of the traction roller 17. The cover element 41 is connected to the cover element mounting structure 42 with screws 43.

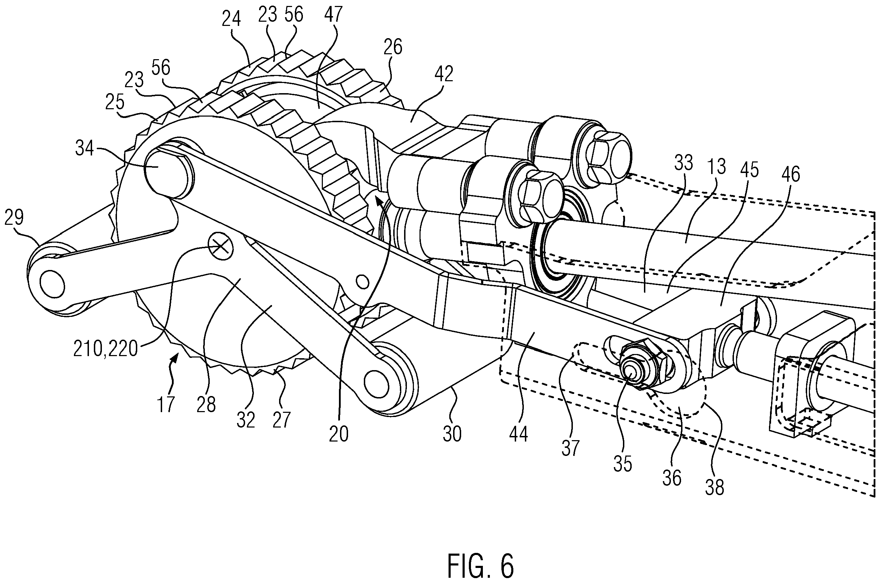

Fig. 6 is a detail view of the part of the feed apparatus 13 adjacent to the traction roller 17. The cover element mounting structure 42 or an element connected to the cover element mounting structure 42 extends around the drive shaft 19. The link element 33 may be a first link element 44 and the feed apparatus may comprise a second link element 45. The first link element 44 and the second link element 45 are arranged on opposite sides of the traction roller 17. The first link element 44 and the second link element 45 are connected via a connection shaft 46.

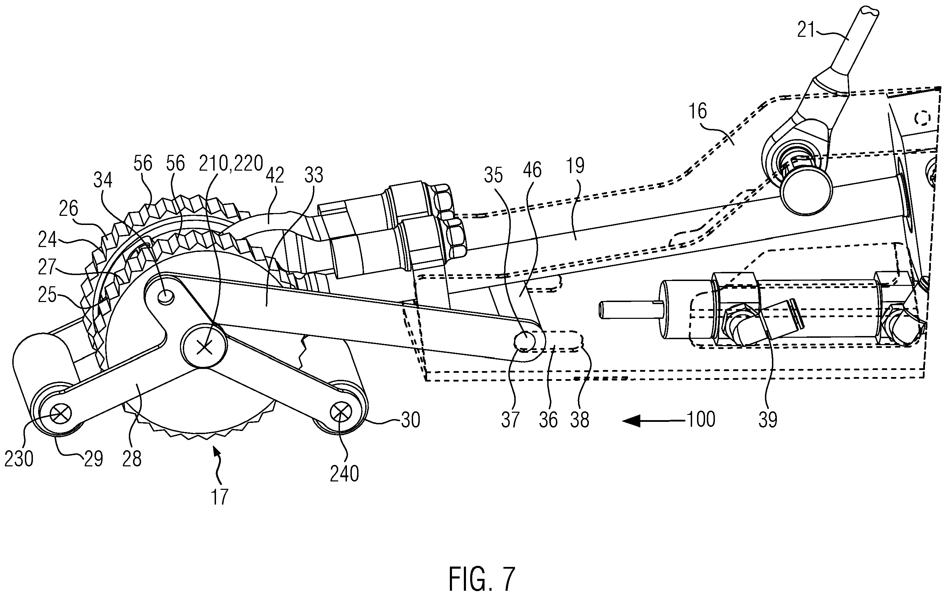

Fig. 7 shows the mounting structure 28 in the minimum position. The protrusion 35 of the of the link element 33 is arranged at the proximal end 37 of the slot hole 36. The distal contact roller 29 is arranged lower than the proximal contact roller 30, in particular with respect to a direction orthogonal to the feed direction 100. A food product that is conveyed towards the slicing station 6 will get into contact with the distal contact roller 29, thereby pushing the distal contact roller 29 upwards. Consequently, the mounting structure 28 is rotated clockwise in Fig. 7 towards the maximum position, in particular to a position between the minimum and maximum position.

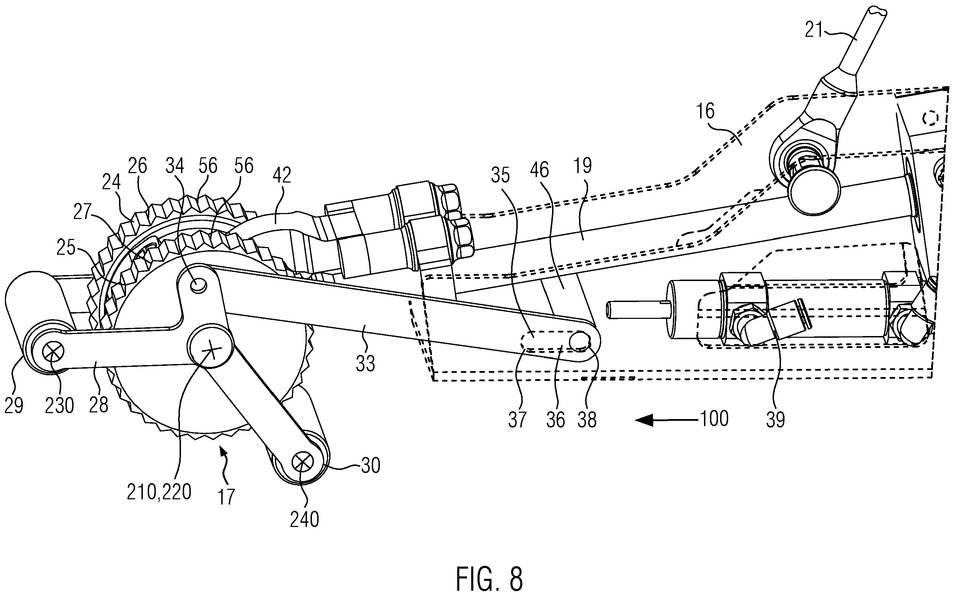

Fig. 8 shows the mounting structure 28 in the maximum position. During the feeding process, the maximum position may not be reached. In the maximum position, the protrusion 35 is arranged at the distal end 38 of the slot hole 36. The proximal contact roller 30 is arranged below the distal contact roller 29, in particular with respect to a direction orthogonal to the feed direction 100. The actuator 30 may be activated to push the link element 33, in particular the connection shaft 46 between the first link element 44 and the second link element 45, and thus the mounting structure 28 towards the minimum position, in particular to a position between the minimum position and the maximum position.

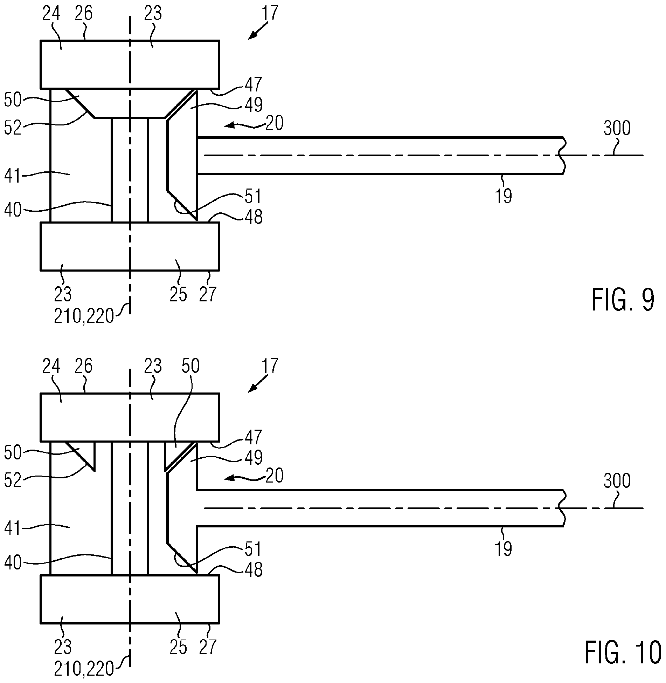

Fig. 9 shows a schematic top view of a section of a feed apparatus 13 according to an embodiment of the invention to show the transmission 20 between the drive shaft 19 and the traction roller 17. No contact rollers are shown in Fig. 9. The traction roller 17 comprises a first roller 26 and a second roller 27. The first roller 26 has a first circumferential traction surface 24 and a first side surface 47. The second roller 27 has a second circumferential traction surface 25 and a second side surface 48. The first side surface 47 and the second side surface 48 are facing towards each other. The transmission 20 comprises a first transmission element 49 and a second transmission element 50. The first transmission element 49 is connected or attached to the drive shaft 19. The second transmission element 50 is connected or attached to the traction roller 17, in particular the first side surface 47 of the first roller 26 or the rotation shaft 40. The first transmission element 49 may be a bevel gear. The second transmission element 49 may be a bevel gear.

The first transmission element 49 comprises a first transmission surface 51. The second transmission element 50 comprises a second transmission surface 52. The first transmission surface 51 is configured to mate with the second transmission surface 52, such that a rotation of the drive shaft 19 can be transmitted to the traction roller 17. Teeth may be formed on the first transmission surface 51 and the second transmission surface 52 (not shown).

Fig. 10 shows a schematic top view of a section of a feed apparatus 13 according to another embodiment of the invention. In contrast to Fig. 9, the first transmission element 49 is a bevel gear that is integrally formed in the drive shaft 19. The second transmission element 50 is connected or attached to the first side surface 47 of the first roller 26. The second transmission element 50 is a bevel ring.

Combinations of the embodiments shown in Figs. 8 and 9 are also possible. For example, the first transmission element 49 may be attached or connected to the drive shaft drive shaft 19 and the second transmission element 50 may be a bevel ring attached to the first side surface 47 of the first roller 26. Alternatively, the first transmission element 49 may be integrally formed in the drive shaft 19 and the second transmission element 50 may be a bevel gear attached to the first side surface 47 of the first roller 26 or the rotation shaft 40.

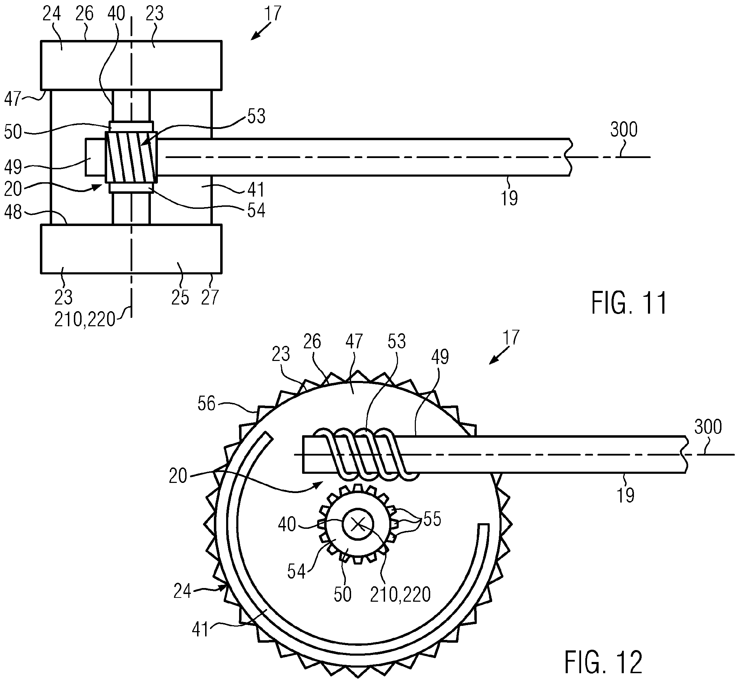

Fig. 11 shows a schematic top view of a section of a feed apparatus 13 according to an embodiment of the invention to show the transmission 20 between the drive shaft 19 and the traction roller 17. The transmission 20 is a worm drive. The first transmission element 49 is a worm or worm screw 53 and the second transmission element is a worm gear or worm wheel 54. The worm screw 53 is integrally formed onto the drive shaft 19. The worm screw 53 may also be a separate element that is attached to the drive shaft 19. The worm wheel 54 is attached to the rotation shaft 40 of the traction roller 17 or may be integrally formed in the rotation shaft. The worm wheel 54 has worm teeth 55 protruding from a circumferential surface of the worm wheel 54. The worm teeth 55 engage with the worm screw 53.

Fig. 12 shows a side view of Fig. 11. For visibility, the second roller 27 of the traction roller 17 is not shown. Fig. 12 further shows teeth or ripples 56 formed on the circumferential traction surface 23 of the traction roller 17. The teeth or ripples 56 are cover the entire circumferential traction surface 23 of the first roller 26 and/or the second roller 27. The teeth or ripples 56 may also only partially cover the circumferential traction surface 23 of the first roller 26 and/or the second roller 27. The teeth or ripples 56 may be formed on the first circumferential traction surface 24 and/or the second circumferential traction surface 25. Alternatively, the first circumferential traction surface 24 and/or the second circumferential traction surface 25 may be corrugated or have a pattern formed therein.

In Figs. 9 to 11, no corrugations, patterns, teeth or ripples 56 are shown for simplicity. However, the first circumferential traction surface 24 and/or the second circumferential traction surface 25 of these embodiments may also comprise corrugations, patterns, teeth or ripples 56.

Fig. 12 further shows the cover element 41 extending partially around the traction roller axis 210. For simplicity, the cover element mounting structure 42 is not shown in Fig. 12.

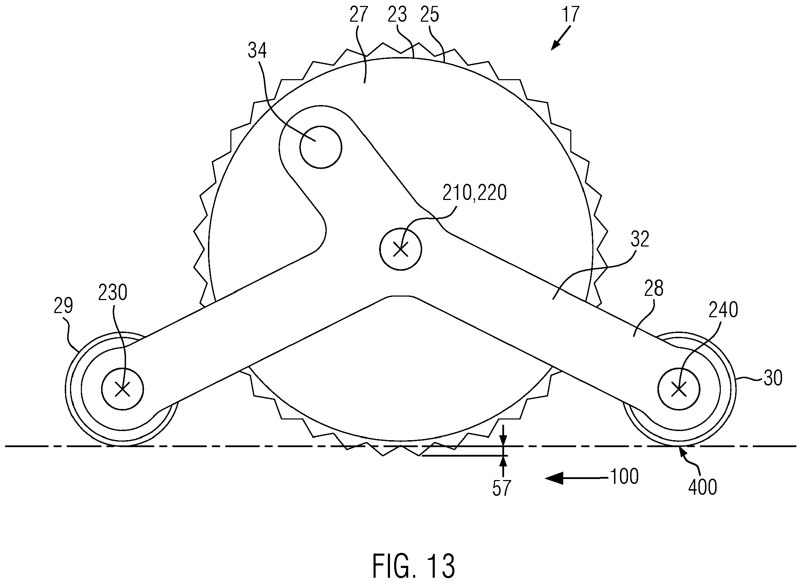

Fig. 13 shows a schematic side view of part of a feed apparatus according to an embodiment of the invention. In Fig. 13, only the traction roller 17, the mounting structure 28, the distal contact roller 29 and the proximal contact roller 30 are shown for simplicity. The circumferential surfaces, in particular on the lower side, in particular the side that is facing the food product, of the proximal contact roller 30 and the distal contact roller 29 define a tangential plane 400. The traction roller 17 extends through the tangential plane 400. The extension of the traction roller 17 through the tangential plane 400 defines the penetration depth 57, in particular the depth of how far the traction roller 17 reaches into the food product

## Claims

1. Feed apparatus for feeding food products to a slicing station of a food slicing machine, comprising
a drive having a drive shaft adapted to rotate about a drive shaft axis,
a traction roller arranged to rotate about a traction roller axis, wherein the traction roller is configured to contact a food product, in particular an upper surface of said food product, and to support conveying said food product towards the slicing station,
a transmission configured to transmit a rotation of the drive shaft to the traction roller, wherein the drive shaft axis of the drive shaft is non-parallel to the traction roller axis of the traction roller.

2. Feed apparatus according to claim 1, wherein a projection of the traction roller axis onto a horizontal plane is orthogonal to a projection of the drive shaft axis onto said horizontal plane.

3. Feed apparatus according to claim 1 or 2, wherein the transmission comprises or consists of a first transmission element and a second transmission element, wherein the first transmission element is connected to the drive shaft or integrally formed in the drive shaft, wherein the second transmission element is connected to the traction roller or integrally formed in the traction roller.

4. Feed apparatus according to claim 3, wherein the first transmission element comprises a first transmission surface, wherein the second transmission element comprises a second transmission surface, wherein the first transmission surface is configured to mate with the second transmission surface, such that the rotation of the drive shaft can be transmitted to the traction roller.

5. Feed apparatus according to claim 3 or 4, wherein the first transmission element is a bevel wheel arranged at the drive shaft and the second transmission element is a bevel wheel or bevel ring arranged at the traction roller, in particular at a rotation shaft or a side surface of the traction roller.

6. Feed apparatus according to claim 3 or 4, wherein the first transmission element is a worm arranged at the drive shaft and the second transmission element is a worm gear arranged at the traction roller, in particular at a rotation shaft of the traction roller.

7. Feed apparatus according to any one of the preceding claims, wherein the traction roller comprises a rotation shaft, a first roller and a second roller, wherein the first roller and the second roller are connected to the rotation shaft.

8. Feed apparatus according to any one of the preceding claims, wherein the drive shaft primarily extends in a first, in particular vertical, plane, wherein the first plane is orthogonal to the traction roller axis.

9. Feed apparatus according to any one of the preceding claims, wherein the traction roller conveys the food product along a feed direction, wherein the drive shaft primarily extends in a plane defined by the feed direction and a direction orthogonal to the feed direction.

10. Feed apparatus according to any one of the preceding claims, wherein the feed apparatus further comprises a frame, wherein the traction roller, the drive shaft and the drive are arranged on the frame.

11. Feed apparatus according to any one of the preceding claims, wherein the feed apparatus further comprises a cover element extending partially around the traction roller axis.

12. Feed apparatus according to any one of the preceding claims, wherein the feed apparatus comprises a coupling interface, wherein the coupling interface is arranged in or adjacent to the drive shaft or the transmission, wherein an assembly of the feed apparatus comprising at least the traction roller, is adapted to be detachable from the rest of the feed apparatus via the coupling interface.

13. Food slicing machine for slicing food products comprising
a slicing station comprising a knife blade, and
a feed apparatus according to any one of claims 1 to 12, wherein the feed apparatus is configured to convey the food products towards the knife blade.

14. Food slicing machine according to claim 13, wherein the feed apparatus is an upper feed apparatus, and the food slicing machine further comprises a lower feed apparatus and/or a rear feed apparatus.

15. Food slicing machine according to claim 13 or 14, wherein the traction roller is arranged adjacent to the knife blade, in particular between the knife blade and the drive shaft.
